**Europäisches Patentamt**

**European Patent Office**

**Office européen des brevets**

(11) Publication number: **0 259 494 B1**

(12)

# EUROPEAN PATENT SPECIFICATION

(45) Date of publication of patent specification :
**21.11.91 Bulletin 91/47**

(51) Int. Cl.⁵ : **G01G 3/02, G01L 1/14, G01G 19/56**

(21) Application number : **87901118.7**

(22) Date of filing : **03.02.87**

(86) International application number :
**PCT/JP87/00070**

(87) International publication number :
**WO 87/04786 13.08.87 Gazette 87/18**

(54) **WEIGHT-DETECTING DEVICE.**

(30) Priority : **03.02.86 JP 21403/86**
**03.02.86 JP 21404/86**

(43) Date of publication of application :
**16.03.88 Bulletin 88/11**

(45) Publication of the grant of the patent :
**21.11.91 Bulletin 91/47**

(84) Designated Contracting States :
**DE FR GB IT SE**

(56) References cited :
**EP-A- 0 209 101**
**FR-A- 2 531 215**
**GB-A- 1 453 934**
**GB-A- 2 162 029**
**JP-A- 4 919 875**
**JP-A- 5 994 028**
**JP-A-49 103 663**
**JP-A-50 138 864**
**JP-U- 49 983**
**JP-U- 59 918**
**US-A- 4 499 773**
**PATENT ABSTRACT OF JAPAN, vol. 5, no. 202 (P-95)(874), December 22, 1981 & JP-a-56 125 630**

(73) Proprietor : **MATSUSHITA ELECTRIC INDUSTRIAL CO., LTD.**
**1006, Oaza Kadoma**
**Kadoma-shi, Osaka-fu, 571 (JP)**

(72) Inventor : **SAKAMOTO, Kazuho**
**24, Umedanikitadani Kizu-cho, Sohraku-gun**
**Kyoto-fu 619-02 (JP)**
Inventor : **MIHARA, Makoto**
**1-4-10, Higashinakamoto Higashinari-ku**
**Osaka-shi Osaka-fu 537 (JP)**
Inventor : **OHJI, Kenzo**
**1-680-72, Satsukidai Ikoma-shi**
**Nara-ken 630-02 (JP)**
Inventor : **ITOU, Shuji**
**719-28, Sakate Tawaramoto-cho**
**Shiki-gun Nara-ken 636-03 (JP)**

(74) Representative : **Eisenführ, Speiser & Strasse**
**Martinistrasse 24**
**W-2800 Bremen 1 (DE)**

## Description

### FIELD OF THE INVENTION

This invention relates to a scale for measuring the weight of an object. More particularly, it relates to a weight detecting apparatus as a means of enhancing the function and performance, by detecting the weight of an object and effectively utilizing this weight information. For example, as a means of effectively utilizing the weight information, a heat cooking appliance is known, in which the cooking performance may be enhanced by detecting the weight of the food in the heating compartment and heating at an output optimum for that weight. This invention relates to such weight detecting apparatus.

### BACKGROUND TECHNIQUE

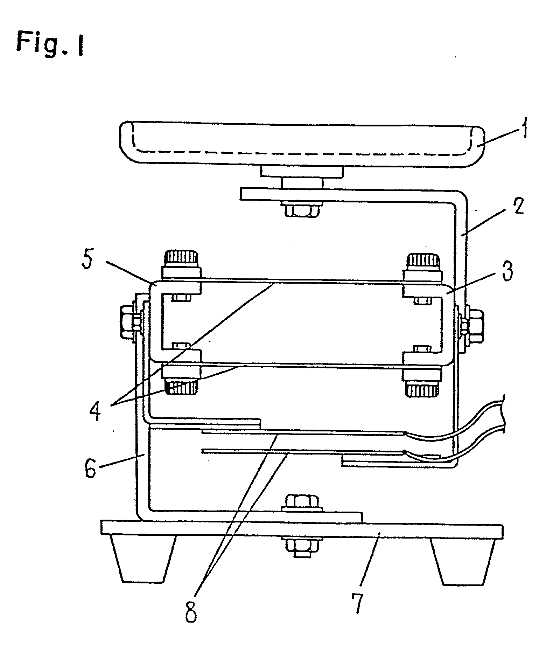

In a conventional scale, for example as shown in Fig. 1, the object to be measured is put on a tray 1, and its load is linked to a parallel movement side parallel holding spacer 3 by way of a load support 2. This spacer 3 is linked to a fixed side parallel holding spacer 5 by way of a leaf spring 5 fixed vertically in a parallel state. This second spacer 5 is fixed on a foundation 7 through a support 6. Two sheet metal electrodes 8 are respectively mounted on the parallel movement side parallel holding spacer 3 and the fixed side parallel holding spacer 5.

When the object to be measured is put on the tray 1, the leaf spring 4 is deformed by its load, and the portion fitted to the parallel movement side holding spacer 3 side is dislocated downward. As a result, the distance of the two sheet metal electrodes 8 changes, and the electrostatic capacity between the sheet metal electrodes varies. The weight is measured by detecting this change of electrostatic capacity.

However, in such scale or weight detecting apparatus of cooking appliance, since the detection of weight depends on the electrostatic capacity between sheet metal electrodes, the following problems are involved.

Firstly, the sheet metal electrodes 8 are exposed to the atmosphere, and dew or water drops may be formed between the sheet metal electrodes depending on the ambient humidity. Accordingly, the electrostatic capacity between sheet metal electrodes varies, and the weight cannot be detected accurately. Meanwhile, the cooking appliance is installed in a kitchen, and is exposed to steam generated from food, and the humidity varies significantly, making it difficult to detect the weight accurately.

Secondly, when dust deposits on the sheet metal electrodes 8 and absorbs moisture, the electrostatic capacity between sheet metal electrodes varies, making it impossible to measure correctly.

Thirdly, the sheet metal electrodes are large in dimensions, measuring about 50 mm by 50 mm to 100 mm by 100 mm, with the electrode gap ranging from 5 to 10 mm. Changes in the electrode gap by the load are about 2 to 3 mm, and in order to detect them as variations of electrostatic capacity, a large area is needed for the electrodes. Because the area is large and the dislocation between the electrodes is large, it is difficult to isolate the electrodes from fresh air to eliminate the effects of humidity. Thus, in the conventional method, since the measures against dust and humidity were difficult, it was extremely hard to detect the weight accurately.

### DISCLOSURE OF THE INVENTION

In the light of this background, it is hence a primary object of this invention to realize accurate capacitive weight measurements by eliminating effects of deposit of moisture or dust on the precision of measurement.

That is, the weight detecting apparatus of this invention comprises two flat plates made of elastic insulator, a pressure sensitive sensor having these two flat plates glued parallel to each other at a specified interval by means of spacers and having electrodes formed on the confronting sides of these two flat plates, and a load support means for transmitting and supporting the weight of the object to be measured to these flat plates. In this setup, the change in the electrostatic capacity between the electrodes of this pressure sensitive sensor is detected.

In the weight detecting apparatus of this invention, since the functions corresponding to the leaf springs having elasticity and sheet metal electrodes for detecting the electrostatic capacity in the prior art are replaced by a pressure sensitive sensor, that is, two flat plates, electrodes and spacers, it is easy to enclose the electrode gap from outside, and it is possible to eliminate the effects of humidity and dust on the electrostatic capacity between electrodes. Moreover, by opening a small hole in the pressure sensitive sensor to allow the air to come in and out of the electrode gap, barometric changes due to thermal expansion by temperature changes in the air between the electrodes may be avoided.

Furthermore, by coating the pressure sensitive sensor with a water-repellent substance, it is possible to eliminate the effects of leak current or the like due to humidity and dust.

A pressure sensitive sensor having the features mentioned above is described in earlier EP-A 0 209 101 (published 21.1.87). As shown in Fig. 10 of this document the pressure sensitive sensor is impressed by a knife-edge formed at a lever. It is costly to configurate the lever and the pressure sensitive sensor with the precision required for a stable weight detecting performance.

It is therefore a further object of this invention to implement an accurate weight detection by forming the pressurizing part of the pressure sensitive sensor in a specified size and constructing to pressurize a specified position of the pressure sensitive sensor by means of an elastic body. The pressure sensitive sensor generally varies in the characteristics to the weight detection depending on the pressurizing position. Besides, the characteristics to weight detection also differs depending on the size of the pressurizing part, in particular, the area and shape. Therefore, a stable weight detecting performance may be obtained by specifying constant the size and shape of the pressurizing position and pressurizing part.

The load to the pressure sensitive sensor is applied to one of the flat plates, and this pressure sensitive sensor is supported without applying force to the other flat plate. The loaded flat plate is deformed due to the load, and the electrostatic capacity varies corresponding to the change in the gap between two electrodes, and it is detected and the weight is measured. It is not easy, generally, to make uniform the constant of elasticity of two flat plates which compose the pressure sensitive sensor. When force is applied to both, a synthetic deformation of two plates is formed, and the change in the electrostatic load depending on the load becomes unstable, and accurate weight detection is difficult. Therefore, by applying a load only to one of the flat plates and supporting so that the other flat plate may be free of load, a stable deformation occurs, and accurate weight detection is enabled. The upper and lower flat plates may be made in a same thickness, and it is advantageous in the aspects of manufacturing and cost.

Besides, to protect the pressure sensitive sensor from an excessive load, it is designed that a load may be applied to the pressure sensitive sensor through an elastic body possesing a large dislocation due to the deflection of flat plate of the pressure sensitive sensor, and a stopper is provided as a means of defining the dislocation operating when the elastic body is deformed as specified. Thus, the pressure sensitive sensor as a weight detecting part of a small dislocation may be protected from excessive load.

## BRIEF DESCRIPTION OF THE DRAWINGS

Fig. 1 is a side view showing the structure of a conventional scale;

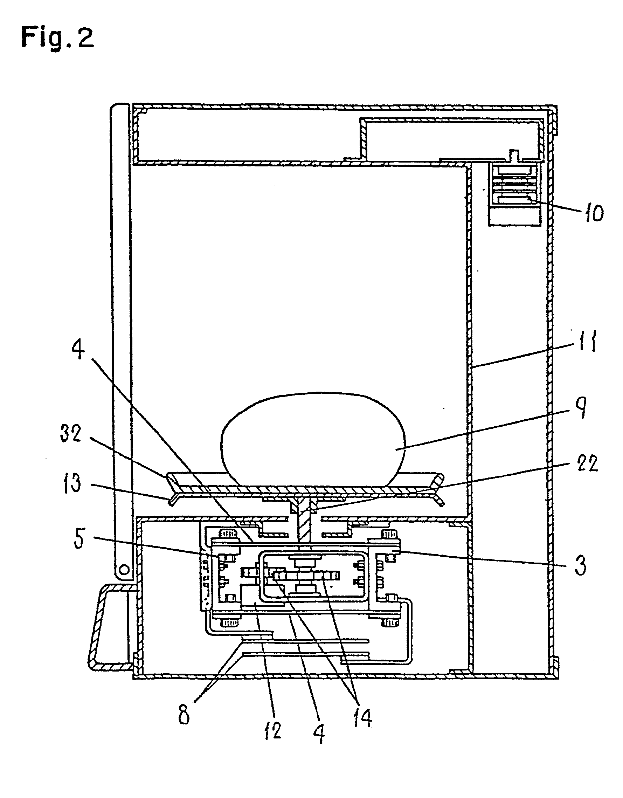

Fig. 2 is a side sectional view showing the mounting state of a conventional weight detecting apparatus on a cooking appliance;

Fig. 3 is a disassembled perspective view of a pressure sensitive sensor of a weight detecting apparatus as one of the embodiments of this invention, showing also a pressurizing member and a sensor bed as sensor supporting means;

Fig. 4 is a sectional view of the same pressure sensitive sensor;

Fig. 5 is a partial sectional view showing the load transmission state to the same pressure sensitive sensor;

Fig. 6 is a partial sectional perspective view showing the pressure sensitive sensor and the supporting mechanism as load supporting means;

Fig. 7 is a side view showing the constitution having the same weight detecting apparatus mounted on a scale;

Fig. 8 is a side sectional view showing the mounting state of the same weight detecting apparatus on a cooking appliance;

Fig. 9 is a circuit diagram showing an oscillation circuit;

Fig. 10 is an output waveform diagram of the same oscillation circuit;

Fig. 11 is a characteristic diagram showing the correlation of weight and oscillation frequency; and

Fig. 12 is a control circuit diagram of a cooking appliance on which the same weight detecting apparatus is mounted.

## BEST MODE FOR EFFECTING THE INVENTION

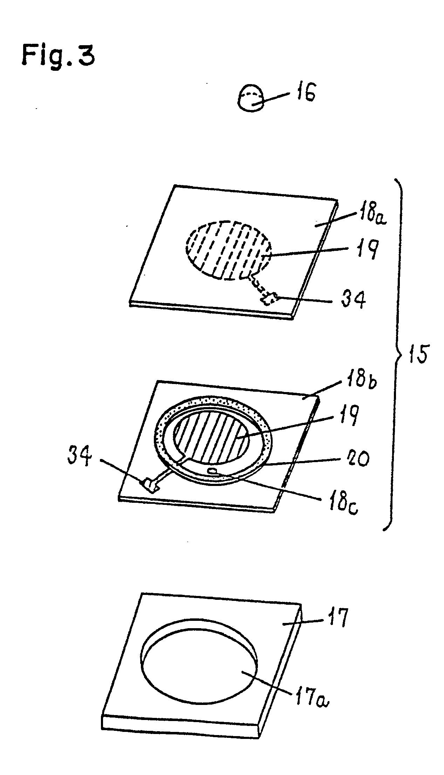

Fig. 3 shows the structure of a pressure sensitive sensor 15 as an embodiment of a weight detecting part small in dislocation, together with a pressurizing member 16 for pressurizing the pressure sensitive sensor and a sensor bed 17 as a sensor supporting means to support the pressure sensitive sensor 15. The pressure sensitive sensor 15 is composed by printing an electrode 19 to upper and lower flat plates 18a, 18b which are insulators having elasticity, and gluing together the flat plate 18 (hereinafter the assembly of the upper and lower flat plats 18a, 18b is called a flat plate 18) by way of a spacer 20. The material of this flat plate 18 may be any insulator having elasticity, such as ceramics, and in particular, alumina $(Al_2O_3)$ is optimum.

The conventional sheet metal electrode 8 measures about 50 mm by 50 mm to 100 mm by 100 mm, with the electrode gap of as large as 5 to 10 mm. In this invention, the flat plate 18 measures 30 mm by 30 mm, and the electrode gap is as small as 40 to 60 μm, and when the flat plate 18 is made in a thickness of 0.5 mm, the thickness of the pressure sensitive sensor 15 is only about 1.04 to 1.06 mm. As a result, the electrostatic capacity as an electric characteristic and its rate of change to load is equal to or even greater than that of the prior art. This is because the electrode gap of this two-piece flat plate 18 is glued in a narrow gap of only 40 to 60 μm. The gluing technique may be easily realized by mixing beads of Ø40 to 60 μm into the spacer 20, same as the present gluing technology of glass plates of liquid crystal or the like as display device. Therefore, because of the narrow electrode gap, the electrode area may be smaller to obtain the same electrostatic capacity as in the conventional constitution. Or when the two flat plates 18 are made of alumina ceramic in plate thickness +0.5, the dislocation is very small, for example, about 3 to 10 µm per 1 kg of load. If the dislocation by load is small, since the electrode gap itself is small, the rate of change of electrostatic capacity is large, being equal to or even greater than the conventional value.

Thus, the function corresponding to the conventional leaf spring 4 and sheet metal electrode 8 is replaced by the pressure sensitive sensor 15, and the size is small and dislocation is small, so that the electrode gap may be easily enclosed from outside, and influences of moisture and dust may be eliminated.

That is, when mounted on a cooking appliance, steam is generated from the food, and the humidity of the location of installation, such as the kitchen, is high. Therefore, dew may be condensed on the electrode 19 or dust depositing on the electrode 19 may absorb moisture. As a result, the electrostatic capacity between electrodes varies. It is therefore desired to isolate the air between the electrodes from the fresh air, and the air between the electrodes may be sealed off by means of the flat plate 18 and spacer 20. However, because of the cooking appliance, the temperature becomes high and the air between the electrodes is expanded by heat. And if enclosed by a rigid material, the pressure between the electrodes varies due to the thermal expansion of the air, and the electrostatic capacity may vary due to deflection of the flat plate 18. To solve these two problems, the electrodes are enclosed by the flat plate 18 and spacer 20 so as to shut off dew and dust deposit, and a hole is opened to allow the air to come in and out due to thermal expansion. In Fig. 3, a hole 18c is provided in the lower flat plate 18b, and this flat plate hole 18c should be large enough to allow the air to come in and out due to thermal expansion, but not too large to admit moisture and dust easily.

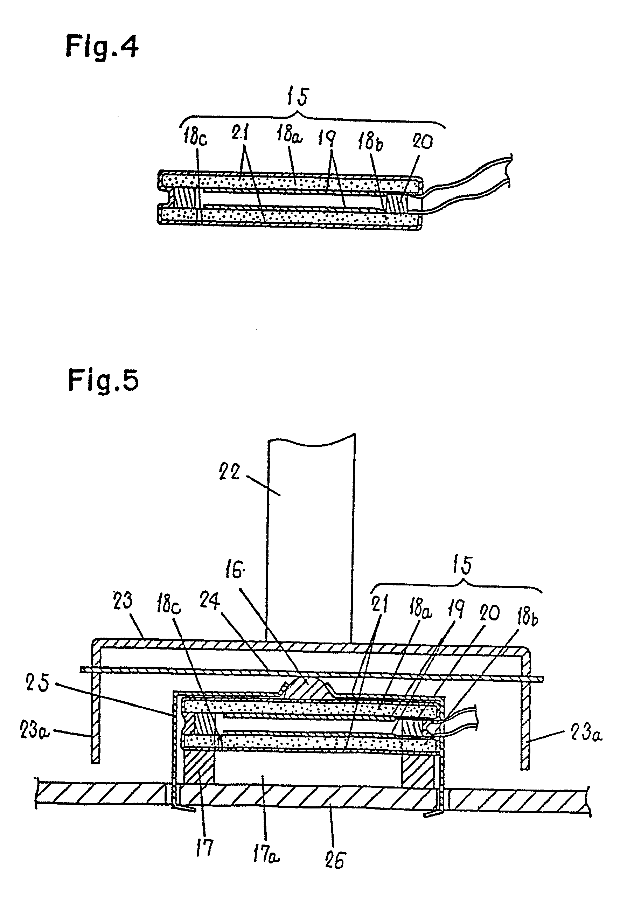

Fig. 4 is a sectional view showing the composition of this pressure sensitive sensor 15. By coating the outside of the pressure sensitive sensor 15 with a sensor coat 21 (not shown in Fig. 1) made of a water-repellent material, effects of leak current due to dew or dust depositing on the surface of pressure sensitive sensor 15 may be eliminated, and an accurate weight detection may be enabled. As the material having water-repellent property, for example, polyimide-amide resin, silicon resin, and fluoroplastic may be used.

Fig. 5 shows an embodiment of support transmission means of load to the pressure sensitive sensor 15. The weight of the object to be measured is transmitted from a shaft 22 to a stopper 23 and is applied to the pressurizing member 16 through a protective leaf spring 24 made of an elastic material. The pressurizing member 16 acts on the upper flat plate 18a of the pressure sensitive sensor 15, and the upper flat plate 18a is deformed, and the gap between the upper and lower electrodes 19 varies. This can be detected as the change in the electrostatic capacity.

The deformation corresponding to the load of the upper flat plate 18a of the pressure sensitive sensor 15 varies with the size of the pressurizing member 16, that is, the area of pressurizing the upper flat plate 18a, and the weight detection characteristic varies. The smaller the pressurizing area, the greater is the deformation, and the deformation becomes smaller if the pressurizing area is larger.

Also, depending on the position of pressurizing the upper flat plate 18a, the deformation characteristic of the upper flat plate 18a varies. If pressurized in the same area, the deformation is the largest in the central part, and becomes smaller as going remote from the center.

Therefore, by controlling constant the pressurizing area and pressurizing position, an accurate weight detection is possible. Accordingly, the pressurizing plane of the pressurizing member 16 is a flat plane of a specified surface area, and the pressurizing position is determined by a sensor cover 25.

Furthermore, the shape of the part contacting with the protective leaf spring 24 of the pressurizing member 16 is hemispherical. The surface is spherical because the force applied from the protective leaf spring 24 can be received in the middle part of the pressurizing member 16, and the pressurizing plane of the pressurizing member 16 can pressurize the upper flat plate 18a uniformly. Therefore, if the object to be measured is put on a position off the shaft 22 and the protective leaf spring 24 is inclined, it is received nearly at the center of the pressurizing member 16, and the pressurization to the upper flat plate 18a becomes nearly uniform. The shape of this pressurizing member 16 may not be necessarily spherical. That is, the same effect may be obtained by designing the surface area of receiving load from the protective leaf spring properly smaller than the pressurizing plane to pressurize the upper flat plate 18a.

The lower flat plate 18b is supported by the sensor bed 17 as a sensor support means. A hole 17a is opened in this sensor bed 17 so as to support beneath the part contacting with the spacer 20 of the lower flat plate 18b. By supporting the pressure sensitive sensor 15 by making the hole 17a in the part of the sensor bed 17 opposing to the inside from the pact contacting with the spacer 20 of the lower flat plate 18b, force is not applied to the deformed part of the lower flat plate 18b, that is, the part sensitive to pressure. In other words, the load applied to the shaft 22 is applied to the pressurizing member 16 by way of stopper 23 and protective leaf spring 24. The load of the pressurizing member 16 is applied to the upper flat plate 18a which makes up the pressure sensitive sensor 15. Since the upper flat plate 18a is supported on its circumference by the spacer 20, force is applied to the inside part of the spacer 20, that is, the part sensitive to pressure, and deformation occurs. This load is transmitted to the lower flat plate 18b through spacer 20. However, the lower flat plate 18b is supported by the part of the spacer 20 by sensor bed 17, and the part sensitive to pressure of the lower flat plate 18b, that is, the inside part from the spacer 20 is off the hole 17a of the sensor bed so that deformation does not occur. As a result, only the upper flat plate 18a is deformed, and the lower flat plate 18b is not deformed.

If the sensor bed hole 17a is not provided in the sensor bed 17, that is, if it is a mere solid flat plane, this sensor bed 17 and the lower flat plate 18a are very rarely in the same parallelism perfectly. If the sensor bed 17 is warped to the upper side, the lower flat plate 18a is pushed up and deformed. In case there is foreign matter in the sensor bed 17, or if the sensor bed 17 surface is not smooth due to injury or the like, the lower flat plate 18b will be similarly deformed. If the both flat plates 18a, 18b are deformed, the constant of elasticity may be different between the two, and the pressing position of the lower flat plate 18a may differ due to foreign matter or warp. Therefore, synthetic complicated changes in the electrostatic capacity due to the upper and lower flat plates 18a, 18b may occur, and unstable changes may take place. In such a case, it is difficult to detect the weight accurately.

Thus, in order to detect the weight accurately, it is important to pressurize only one of the flat plates. Moreover, by supporting so that only one flat plate may be deformed, the upper and lower flat plates may be made in a same thickness, and it is possible to assemble without distinguishing upper and lower plates, and the cost may be lowered, too.

To protect from excess load, when a specified load is applied, the protective leaf spring 24 is deformed, and its part attached to the stopper 23 is dislocated downward. As a result, a stopper element 23a as a dislocation defining means provided in the stopper 23 hits against a sensor support 26, and the portion exceeding the specified load is applied to the stopper element 23a, while up to the specified load is applied to the pressure sensitive sensor 15. The deformation of pressure sensitive sensor 15 is very small as described above, and the dislocation of protective leaf spring 24 is set rather large, to about 0.2 to 1 mm per 1 kg, with respect to about 3 to 10 $\mu$m per 1 kg. Since the pressure sensitive sensor 15 is very small in dislocation, the dimentional precision of the stopper element 23a to operate at specified load must be enhanced without the presence of protective leaf spring 24, which is difficult to realize. That is, the clearance between the stopper element 23a and sensor support 26 must be accurately controlled in the unit of $\mu$m. However, dislocation of the protective leaf spring 24 is about 0.2 to 1 mm per 1 kg, and the precision of operation of stopper element 23a is about 0.1 mm, and it is possible to realize easily without improving the precision so much.

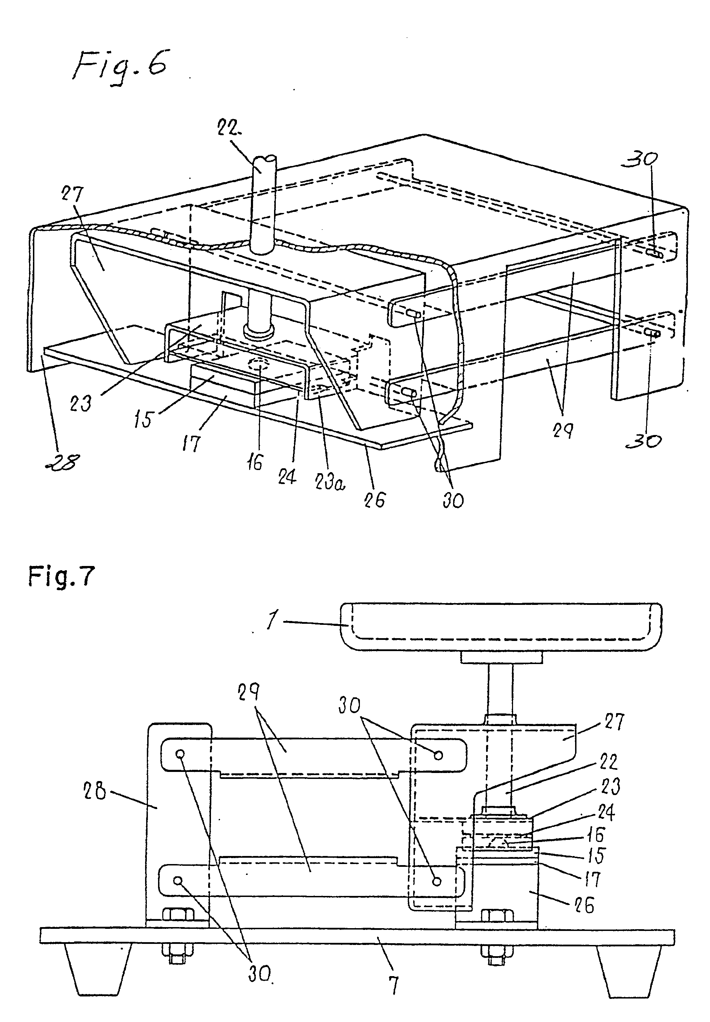

Fig. 6 is a partial sectional perspective view showing the support transmission mechanism to transmit the load to the pressure sensitive sensor 15 as mentioned in Fig. 5. Fig. 7 is a side view of an embodiment of application into a scale. In the actual weight measurement, the object to be measured is not always put in the center of a tray 1. Therefore, regardless of the mounting position, the load must be accurately concentrated and transmitted to the pressure sensitive sensor 15. For this purpose, the so-called Roberval mechanism used generally in scales is known. Its advantages are that the weight can be detected accurately regardless of the mounting position, and that the weighing platform is dislocated while keeping parallelism. In the composition of Roberval mechanism, four corners of a parallelogram are set in movable state, one side is fixed, and its confronting side is movable parallel. In Fig. 6, a parallel movement piece 27 is the side movable parallel, and its confronting side's fixed support 28 is a fixed side. Two parallel holding pieces 29 and these two are fastened at four corners by pins 30, thereby making up a parallelogram. A shaft 22 is attached to the parallel movement piece 27, so that the load may be transmitted to the pressure sensitive sensor 15.

Thus, by employing the Roberval mechanism, the load may be concentrated on a small pressure sensitive sensor 15 regardless of the mounting position, so that an accurate weight measurement may be realized.

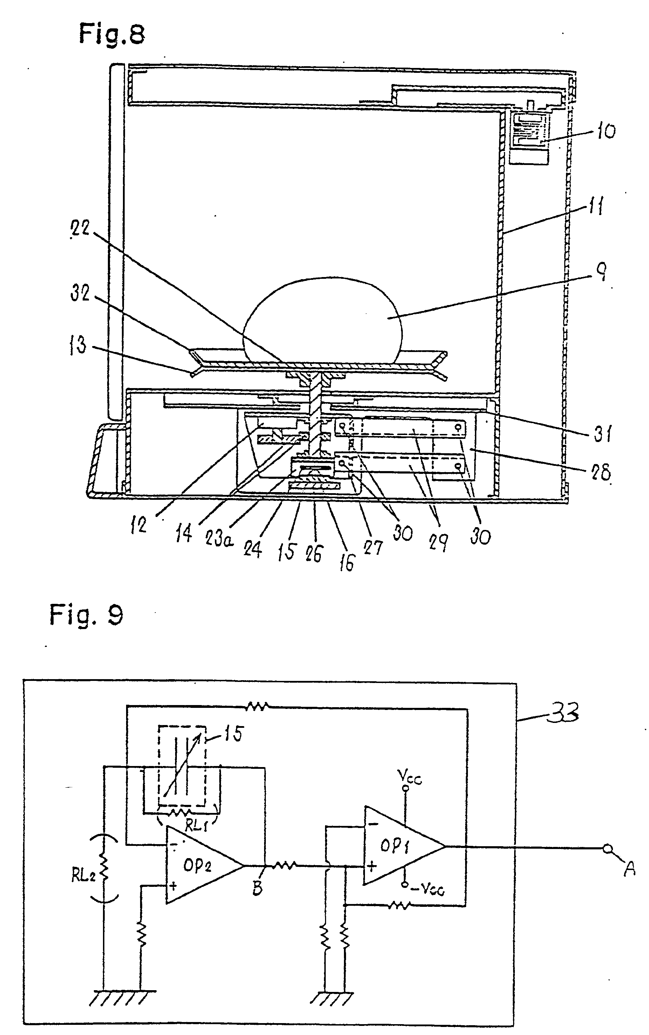

Fig. 8 is a side sectional view showing an example of mounting the weight detecting apparatus of this invention on a cooking appliance. It is fitted to the bottom of a heating compartment 11 by way of a chassis 31, and a motor 12 and gear 14 for rotating a turntable 13 are attached to the parallel movement piece 27, and it is designed to control the output of a magnetron 10 properly by detecting the weight of a scale plate 32 and food 9 put on the turntable 13, and the weight may be measured accurately without being influenced by moisture or dust, so that cooking performance may be improved, too. And it is not necessary to put the food in the center of scale plate 32, so that a very easy-to-use cooking appliance may be realized.

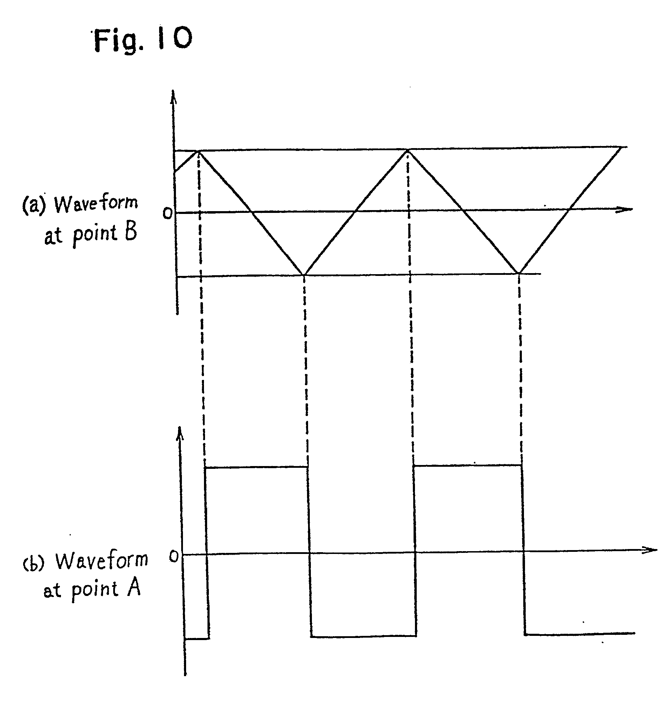

Fig. 9 shows an oscillation circuit 33 for converting the change in electrostatic capacity of pressure sensitive sensor 15 into an oscillation frequency, and the weight is converted into a frequency. Using two operational amplifiers OP1, OP2, the change in charging and discharging time into the electrostatic capacity of the pressure sensitive sensor 15 is converted into an oscillation frequency. Fig. 10 shows output waveforms of operational amplifiers OP1, OP2. Fig. 10a is a voltage waveform at output point B of OP2, while Fig. 10b is a voltage waveform at output point A of OP1. The OP2 makes up an integrating circuit, and it receives the output of OP1. And the OP1 makes up a comparator circuit possessing hysteresis characteristic, and it receives the output of OP2. Thus forming a loop, the oscillation circuit is set up.

If there is no sensor coat 21 in the pressure sensitive sensor 15, leak occurs, as indicated by RL1, RL2 in Fig. 9 due to moisture and dew condensation, and correct frequency conversion is disturbed. This leak occurs between the electrode terminals 34 (electrode terminals 34 are shown in Fig. 3). Therefore, in this embodiment, RL1, RL2 are eliminated by sensor coat 21, so that correct weight measurement is realized.

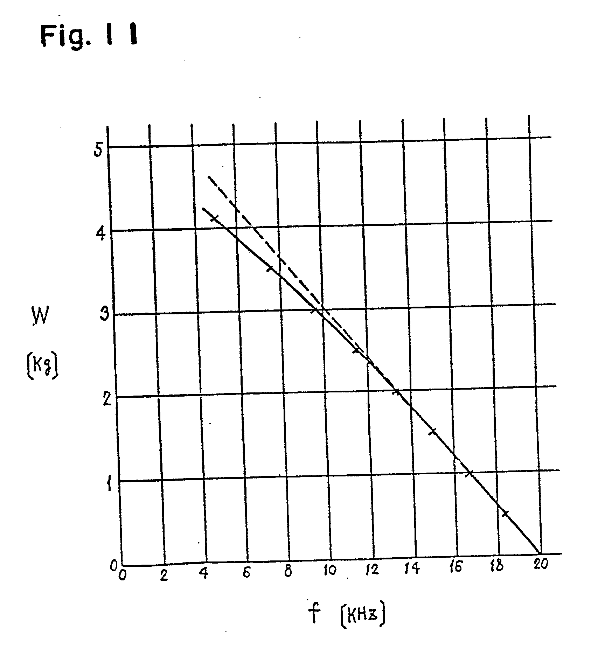

Fig. 11 is a graph showing the relation between oscillation frequency f and weight W of the object, in which the dotted line refers to a straight line. Therefore, the f-W characteristic is as rather curved performance. The performance will be a straight line as indicated by the dotted line if the gap of electrodes 19 in the pressure sensitive sensor 15 varies while keeping prallelism on the entire electrodes 19. Actually, however, since the periphery is supported by the spacer 20, the parallel state cannot be maintained, and a deformation occurs, being large in the central part and becoming smaller as going away from the center. Therefore, a slightly curved performance is obtained as indicated by the solid line.

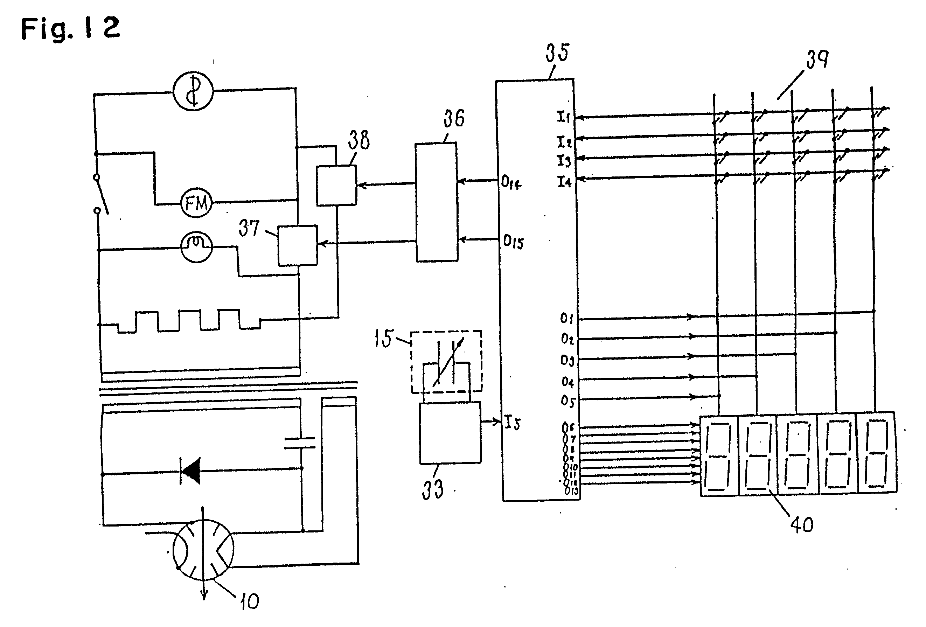

Fig. 12 is a circuit diagram to show a practical composition of a control circuit of a cooking appliance on which the weight detecting apparatus of this invention is mounted. The change in electrostatic capacity of pressure sensitive sensor 15 is converted into a frequency in the oscillation circuit 33, and it is counted by a microcomputer 35, and the weight corresponding to the frequency is calculated. In the micro-computer 35, the f-W characteristic shown in Fig. 11 is stored. This f-W characteristic is stored in a quadratic approximation formula, and is calculated in the form of $W = Af^2Bf + C$ (where A, B, C are constants). The signal for controlling the output of magnetron 10 and others in response to the weight is delivered to a drive circuit 36. The signal of the drive circuit 36 drives a magnetron output control relay 37 and a heat output control relay 38. Numeral 39 refers to an operation unit having keys for input operation of the cooking appliance, and 40 is a display unit to indicate the heating time and other information.

Thus, by this embodiment, an accurate weight detection is realized.

## INDUSTRIAL FIELD OF UTILIZATION

As is clear from the foregoing description, this invention enables to detect the weight accurately. Therefore, not limited to a scale alone, it relates to a wide scope of fields of detecting the weight of an object and effectively utilizing the weight information. For example, when mounted on a cooking appliance, it is possible to detect the weight of food in the heating compartment, control the output accordingly, and enhance the cooking performance as a result. Thus, this invention is intended to be utilized as a means of enhancing the function by detecting the weight and effectively utilizing the weight information.

## Claims

1. A weight detecting apparatus comprising a pressure sensitive sensor (15) for converting an applied force into a corresponding electric signal, a weight detecting circuit for detecting the weight from said electric signal, and a load support means (22, 23), for supporting the load of the object to be measured and transmitting its load to said pressure sensitive sensor (15), characterized by an elastic body (24) to be deformed more than said pressure sensitive sensor (15), said load support means (22, 23) transmitting its load to said pressure sensitive sensor (15) by way of said elastic body (24), and a deformation limiting means (23a) for operating when the deformation of said elastic body due to load is more than specified, wherein said deformation limiting means (23a) is actuated to the object to be measured heavier than specified weight to protect the pressure sensitive sensor (15) from excess weight.

2. A weight detecting apparatus as set forth in claim 1, wherein the area of the pressurizing member (16) contacting with the pressure sensitive sensor (15) is larger than the area confronting the elastic body (24).

3. A weight detecting apparatus as set forth in claim 1, wherein the shape of the pressurizing member (16) confronting the elastic body (24) is a spherical shape.

4. A weight detecting apparatus as set forth in claim 1, wherein said pressure sensitive sensor (15) is composed of flat plates (18a, 18b) made of two elastic insulators, a spacer (20) for holding these flat plates (18a, 18b) opposedly at a proper gap, and electrodes (19) provided on the mutually confronting sides of these flat plates (18a, 18b) and the pressurizing force is converted into an electric signal as the change in the electrostatic capacity accompanying the change in the distance of the electrode gap due to deflective deformation of the flat plates (18a, 18b).

5. A weight detecting apparatus as set forth in claim 4, wherein a hole (18c), for allowing the air in the gap between flat plates (18a, 18b) to come in and out is provided.

6. A weight detecting apparatus as set forth in claim 4, wherein said flat plates (18a, 18b) are made of ceramics.

7. A weight detecting apparatus as set forth in claim 4, wherein said flat plates (18a, 18b) are coated with water-repellent material.

8. A weight detecting apparatus as set forth in claim 4, wherein a sensor support means (17) to support the pressure sensitive sensor (15) is provided, and said sensor support means (17) is composed of other parts than sensitive to pressure of said pressure sensitive sensor (15).

9. A weight detecting apparatus as set forth in claim 8, wherein a load is applied to one of the flat plates (18a) of the pressure sensitive sensor (15) and the part free from deformation of the other flat plate (18b) is supported by the sensor support means (17).

10. A weight detecting apparatus as set forth in claim 8, wherein two flat plates (18a, 18b) of the pressure sensitive sensor (15) are composed in a same plate thickness.

11. A weight detecting apparatus as set forth in claim 1, wherein the load support means is supported in a state where four corners are movable, making up a parallelogram, in which one side is fixed and the opposing side is movable parallel to compose a Roberval mechanism.

## Patentansprüche

1. Gewichtsdetektorvorrichtung mit einem druckempfindlichen Sensor (15), der eine einwirkende Kraft in ein entsprechendes elektrisches Signal umsetzt, einem Gewichtsdetektorschaltkreis, der aus dem elektrischen Signal das Gewicht bestimmt, und einem Lasttragemittel (22, 23), das die Last des zu messenden Gegenstandes trägt und seine Last auf den druckempfindlichen Sensor (15) überträgt, gekennzeichnet durch einen elastischen Körper (24), der stärker als der druckempfindliche Sensor (15) deformierbar ist, wobei das Lasttragemittel (22, 23) seine Last über den elastischen Körper (24) auf den druckempfindlichen Sensor (15) überträgt, und ein Deformationsbegrenzungsmittel (23a), das dann wirkt, wenn die Deformation des elastischen Körpers durch die Last größer ist als vorgeschrieben, wobei das Deformationsbegrenzungsmittel (23a) durch das zu messende Objekt betätigt wird, das schwerer als das vorgeschriebene Gewicht ist, um den druckempfindlichen Sensor (15) vor Übergewicht zu schützen.

2. Gewichtsdetektorvorrichtung nach Anspruch 1, bei dem der Bereich eines Druckteiles (16), der den druckempfindlichen Sensor (15) berührt, größer ist als der Bereich, der dem elastischen Körper (24) gegenüberliegt.

3. Gewichtsdetektorvorrichtung nach Anspruch 1, bei der die Gestalt des Druckteils (16), das dem elastischen Körper (24) gegenüberliegt, kugelförmig ist.

4. Gewichtsdetektorvorrichtung nach Anspruch 1, bei der der druckempfindliche Sensor (15) aus flachen Platten (18a, 18b), die aus zwei elastischen Isolatoren hergestellt sind, einem Abstandshalter (20), der diese flachen Platten (18a, 18b) mit einem angemessenen Zwischenraum gegenüberhält, und Elektroden (19) zusammengesetzt ist, die auf den einander gegenüberliegenden Seiten dieser flachen Platten (18a, 18b) aufgebracht sind, und die Druckkraft in ein elektrisches Signal entsprechend der Änderung der elektrostatischen Kapazität, die die Änderung der Dicke des Elektrodenzwischenraumes wegen der Durchbiegung der flachen Platten (18a, 18b) begleitet, umsetzt.

5. Gewichtsdetektorvorrichtung nach Anspruch 4, bei der ein Loch (18c) vorhanden ist, das es der Luft in dem Zwischenraum zwischen den flachen Platten (18a, 18b) erlaubt, herein- und herauszuströmen.

6. Gewichtsdetektorvorrichtung nach Anspruch 4, bei der die flachen Platten (18a, 18b) aus Keramik bestehen.

7. Gewichtsdetektorvorrichtung nach Anspruch 4, bei der die flachen Platten (18a, 18b) mit wasserabstossendem Material überzogen sind.

8. Gewichtsdetektorvorrichtung nach Anspruch 4, bei der ein Sensorhaltemittel (17) vorgesehen ist, das den druckempfindlichen Sensor (15) hält, und das Sensorhaltemittel (17) aus anderen Teilen zusammengesetzt ist als die druckempfindlichen Teile des druckempfindlichen Sensors (15).

9. Gewichtsdetektorvorrichtung nach Anspruch 8, bei der eine Last auf eine der flachen Platten (18a) des druckempfindlichen Sensors (15) einwirkt, und der von Deformationen freie Teil der anderen flachen Platte (18b) durch das Sensorhaltemittel (17) gehalten ist.

10. Gewichtsdetektorvorrichtung nach Anspruch 8, bei der die flachen Platten (18a, 18b) des druckempfindlichen Sensors (15) aus gleich dicken Platten gebildet sind.

11. Gewichtsdetektorvorrichtung nach Anspruch 1, bei der das Lasttragemittel in einem Zustand gehalten wird, bei dem vier Ecken beweglich sind, und ein Parallelogramm bilden, dessen eine Seite fest ist und die gegenüberliegende Seite parallel beweglich ist und so einen Roberval-Mechanismus bildet.

## Revendications

1. Appareil de détection de poids comprenant un capteur (15) sensible à une pression et destiné à transformer une force appliquée en un signal électrique correspondant, un circuit destiné à détecter le poids à partir du signal électrique, et un dispositif (22, 23) de support de la charge de l'objet à mesurer et de transmission de cette charge au capteur (15) sensible à une pression, caractérisé par un corps élastique (24) destiné à être déformé de façon plus importante que le capteur (15) sensible à une pression, le dispositif de support de charge (22, 23) transmettant sa charge au capteur (15) sensible à une pression par l'intermédiaire du corps élastique (24), et par un dispositif (23a) de limitation de déformation destiné à fonctionner lorsque la déformation du corps élastique sous l'action de la charge dépasse une valeur spécifiée, si bien que le dispositif (23a) de limitation de déformation est commandé pour un objet mesuré plus lourd qu'un poids spécifié afin que le capteur (15) sensible à une pression soit protégé contre l'action d'un poids excessif.

2. Appareil de détection de poids selon la revendication 1, dans lequel la surface de l'organe (16) d'application de pression qui est au contact du capteur (15) sensible à la pression est supérieure à la surface tournée vers le corps élastique (24).

3. Appareil de détection de poids selon la revendication 1, dans lequel la configuration de l'organe (16) d'application de pression placé en face du corps élastique (24) est une forme sphérique.

4. Appareil de détection de poids selon la revendication 1, dans lequel le capteur (15) sensible à une pression comporte des plaques plates (18a, 18b) formées de deux isolateurs élastiques, d'une entretoise (20) destinée à maintenir les deux plaques plates (18a, 18b) en face l'une de l'autre avec un espace convenable, et des électrodes (19) placées sur les faces en regard de ces plaques plates (18a, 18b), et la force d'application de pression est transformée en un signal électrique sous forme de la variation de la capacité électrostatique accompagnant la variation de distance de l'espace séparant les électrodes à la suite de la déformation des plaques plates (18a, 18b) par fléchissement.

5. Appareil de détection de poids selon la revendication 4, dans lequel un trou (18c) destiné à permettre l'entrée et la sortie d'air dans l'espace compris entre les plaques plates (18a, 18b) est formé.

6. Appareil de détection de poids selon la revendication 4, dans lequel les plaques plates (18a, 18b) sont formées de céramique.

7. Appareil de détection de poids selon la revendication 4, dans lequel les plaques plates (18a, 18b) sont revêtues d'un matériau hydrofuge.

8. Appareil de détection de poids selon la revendication 4, dans lequel un dispositif (17) de support du capteur (15) sensible à la pression est présent, et le dispositif de support (17) est composé d'autres parties que celles qui sont sensibles à la pression et appartiennent au capteur (15).

9. Appareil de détection de poids selon la revendication 8, dans lequel une charge est appliquée à l'une des plaques plates (18a) du capteur (15) sensible à la pression, et la partie qui ne se déforme pas dans l'autre plaque plate (18b) est supportée par le dispositif (17) de support de capteur.

10. Appareil de détection de poids selon la revendication 8, dans lequel deux plaques plates (18a, 18b) du capteur (15) sensible à la pression sont réalisées avec la même épaisseur de plaque.

11. Appareil de détection de poids selon la revendication 1, dans lequel le dispositif de support de charge est porté dans un état tel que les quatre coins sont mobiles et forment un parallélogramme dans lequel un côté est fixe et le côté opposé est mobile parallèlement sous forme d'un mécanisme de Roberval.

Fig. I

# Fig. 2

# Fig.3

# Fig.4

# Fig.5

Fig.6

Fig.7

## Fig.8

## Fig. 9

Fig. 10

(a) Waveform
at point B

(b) Waveform
at point A

# Fig. I I

Fig. 12

EP 0 259 494 B1